# EUROPÄISCHE PATENTSCHRIFT

(11) **EP 2 103 204 B1**
(45) Veröffentlichungstag und Bekanntmachung des Hinweises auf die Patenterteilung: **17.11.2010**
(21) Anmeldenummer: 08171432.1
(22) Anmeldetag: 12.12.2008
(51) Int. Cl.: A01F 12/30

(54) **Mähdrescher**
Combine harvester
Moissonneuse-batteuse

(30) Priorität: 20.03.2008 DE 102008015375
(43) Veröffentlichungstag der Anmeldung: 23.09.2009
(73) Patentinhaber: CLAAS Selbstfahrende Erntemaschinen GmbH, 33428 Harsewinkel (DE)
(72) Erfinder: Esken, Dirk, 59494, Soest-Meckingsen (DE); Molitor, Christoph, 33034, Brakel (DE); Nüssing, Daniel, 48231, Warendorf (DE); Terlutter, Michael, 33442, Clarholz (DE); Waten, Björn, 48301, Nottuln (DE)

(56) Entgegenhaltungen:
- EP-A- 0 948 884
- EP-A- 1 609 353
- US-A- 3 599 644
- US-A- 5 021 029

## Beschreibung

Die Erfindung betrifft einen Mähdrescher nach dem Oberbegriff des Anspruchs 1.

Bei Mähdreschern bekannter Bauart erfolgt auf den Strohschüttlern eine Trennung der noch im Emtegutstrom enthaltenen Körner vom Stroh. Zu diesem Zweck sind die Strohschüttler an der Oberseite mit profilierten Belägen mit Durchtrittsöffnungen versehen. Durch diese Öffnungen werden die Körner sowie Kurzstrohteile und Spreu abgeschieden und über einen Rücklaufboden der Reinigungseinrichtung zugeführt. Die längeren Strohteile werden durch die Förderbewegung der Strohschüttler über den Belag und die seitlichen Schüttlerkämme hinweg in Richtung zum Strohauslauf gefördert. Bei den bekannten Strohschüttlern verlaufen die Oberseiten der Beläge und der Schüttlerkämme in einem parallelen Abstand zueinander und in Förderrichtung mit einem gleichen Steigungswinkel je nach Ausführung von etwa 18° bis 23°. Eine derartige Schüttlerausführung ist beispielsweise aus der DE 196 20 338 A1 bekannt.

Um das auf den Strohschüttlern befindliche Erntegut aufzulockern und die Körnerabscheidung zu begünstigen sowie den Fördervorgang auf den Strohschüttlern zu unterstützen, ist es weiterhin bekannt, oberhalb der Strohschüttler eine als Schüttlerhilfe dienende Auflockerungseinrichtung anzuordnen. Eine derartige auf das Erntegut einwirkende Schüttlerhilfe, die als rotierende Fördertrommel mit gesteuerten Förderzinken ausgebildet ist, ist beispielsweise aus der DE 10 2004 031 054 A1 bekannt. Insbesondere beim Mähdrusch von trockenen Erntegütern kann es jedoch dazu kommen, dass sich unter diesen Erntebedingungen sowie durch die zusätzliche Einwirkung der Schüttlerhilfe auf den Belägen der Strohschüttler eine dichte Matte aus Kurzstroh, Ährenteilen und Spreu bildet, die die Durchtrittsöffnungen der Beläge zusetzt. Dadurch wird die Kornabscheidung wesentlich behindert. Infolge der Mattenbildung sind außerdem zwei verschiedene Emtegutströme vorhanden, die sich mit unterschiedlichen Fördergeschwindigkeiten auf den Strohschüttlern bewegen. Während sich die vorwiegend auf den seitlichen Schüttlerkämmen bewegenden längeren Strohteile eine höhere Fördergeschwindigkeit aufweisen, bewegt sich die auf den Schüttlerbelägen befindliche Gutmatte aus kürzeren Erntegutteilen deutlich langsamer, wodurch die Abscheideleistung auf den Belägen verringert wird.

Aus der gattungsbildenden EP 0 948 884 A2 ist ein Mähdrescher gemäß dem Oberbegriff des Anspruches 1 bekannt. Der Mähdrescher weist eine Abscheideeinrichtung auf, die aus einer Mehrzahl nebeneinander angeordneter Strohschüttler besteht, wobei die Strohschüttler jeweils zumindest einen Belag aufweisen, der zwischen zumindest zwei seitlichen, den Belag überragende Stegen, die eine ungleichmäßige Trapezform aufweisen, angeordnet ist. Der Belag ist mit Durchtrittsöffnungen zur Abscheidung von Körnern aus einem Kom-Stroh-Gemisch versehen, wobei der Belag und die Stege in Förderrichtung ansteigend angeordnet sind, Der Belag und die Stege weisen in einem Vorderabschnitt des Strohschüttlers identische Steigungswinkel auf, während in den übrigen Abschnitten diese unterschiedlich große Steigungswinkel aufweisen, wobei der Steigungswinkel der Stege das doppelte des Steigungswinkels des Belages beträgt. Mit der Abscheideeinrichtung soll die Abscheidung von kleinvolumigem Material aus der von den Stegen transportierten Gutmatte verbessert werden. Die verstärkte Abscheidung führt dazu, dass die Dicke der Gutschicht auf den Belägen zunimmt Die Fördergeschwindigkeit der Gutschicht auf den Belägen wird durch die Seitenwände mit zunehmender Gutschichtdicke negativ beeinflusst.

Der Erfindung liegt die Aufgabe zugrunde, die Nachteile des Standes der Technik zu vermeiden und insbesondere die Strohschüttler eines Mähdreschers derart auszubilden, dass eine Erntegut-Mattenbildung mit einer hohen Dichte auf dem Belag weitgehend vermieden bzw. wesentlich reduziert wird.

Diese Aufgabe wird erfindungsgemäß durch die im Patentanspruch 1 genannten kennzeichnenden Merkmale gelöst.

Dadurch dass der Belag und die Schüttlerkämme einen unterschiedlich großen Steigungswinkel aufweisen wird mit einem geringen Aufwand das Zusetzen der Durch trittsöffnungen des Schüttlerbelages vermieden und dadurch der Körnerabscheidegrad der Strohschüttlern erhöht.

Bei einer vorteilhaften Weiterbildung der Erfindung ist der Steigungswinkel des Belages kleiner als der Steigungswinkel der Schüttlerkämme, so dass insbesondere das auf den Belägen befindliche Erntegut mehr beschleunigt wird als das auf den Schüttlerkämmen befindliche Erntegut.

Der Belag weist vorzugsweise einen Steigungswinkel von 8° bis 18° auf.

Bei einer vorteilhaften Weiterbildung der Erfindung weisen die Schüttlerkämme über die gesamte Länge der Strohschüttler einen annähernd konstanten Steigungswinkel auf, so dass lediglich das auf den Belägen befindliche Erntegut bei der Förderbewegung schneller beschleunigt wird, ohne dass dabei das auf den Schüttlerkämmen bewegte Erntegut beeinflusst wird. Damit wird bei beiden Erntegutströmen eine nahezu gleiche Fördergeschwindigkeit erreicht und eine Erntegut-Mattenbildung auf den Belägen verhindert bzw. deren Dicke verringert, so dass ein hoher Körnerabscheidegrad auf den Strohschüttlern erzielt wird.

Vorzugsweise sind der Belag und die Schüttlerkämme über die gesamte Länge der Strohschüttler stufenförmig ausgebildet, wobei die Fallstufen der Beläge aufgrund des geringeren Steigungswinkels eine geringere Höhe aufweisen, als die Fallstufen der Schüttlerkämme. Ein optimales Abscheideverhalten wird dadurch erreicht, dass der Steigungswinkel des Belages erst nach einer ersten Stufe kleiner ist als der Steigungswinkel der Schüttlerkämme.

Alternativ ist der Mähdrescher erfindungsgemäß derart ausgebildet, dass die Schüttlerkämme über die gesamte Länge der Strohschüttler stufenförmig ausgebildet sind und der Belag durchgehend stufenlos verläuft, wodurch sich insbesondere der Vorteil ergibt, dass ein stufenloser Belag einfach und kostengünstig herstellbar und montierbar ist.

Bei einer alternativen vorteilhaften Ausführungsform der Erfindung weisen die Schüttlerkämme und der Belag der Strohschüttler eine erste Stufe auf, wobei die Schüttlerkämme über die gesamte Länge der Strohschüttler stufenförmig ausgebindet sind und der Belag ab der Stufe durchgehend stufenlos verläuft, wobei der Steigungswinkel des Belages nach der ersten Stufe kleiner ist als der Steigungswinkel der Schülerkämme, so dass ein optimaler Kompromiss zwischen Abscheideverhalten und kostengünstiger Herstellung ermöglicht wird.

Vorteilhaft ist den Strohschüttlern eine Auflockerungs- und Fördereinrichtung zugeordnet, die das Abscheideverhalten des Erntegutes in der Abscheideeinrichtung noch weiter verbessert.

Die Erfindung wird nachstehend an einem Ausführungsbeispiel näher erläutert. In der zugehörigen Zeichnung zeigen:
- Figur 1: eine Längsschnittdarstellung eines Mähdreschers mit Strohschüttlern und einer darüber angeordneten Auflockerungs- und Fördereinrichtung,
- Figur 2: eine Längsschnittdarstellung der in Fig. 1 dargestellten Strohschüttler in einer ersten Ausführungsform und
- Figur 3: eine Längsschnittdarstellung der in Fig. 1 dargestellten Strohschüttler in einer zweiten Ausführungsform.

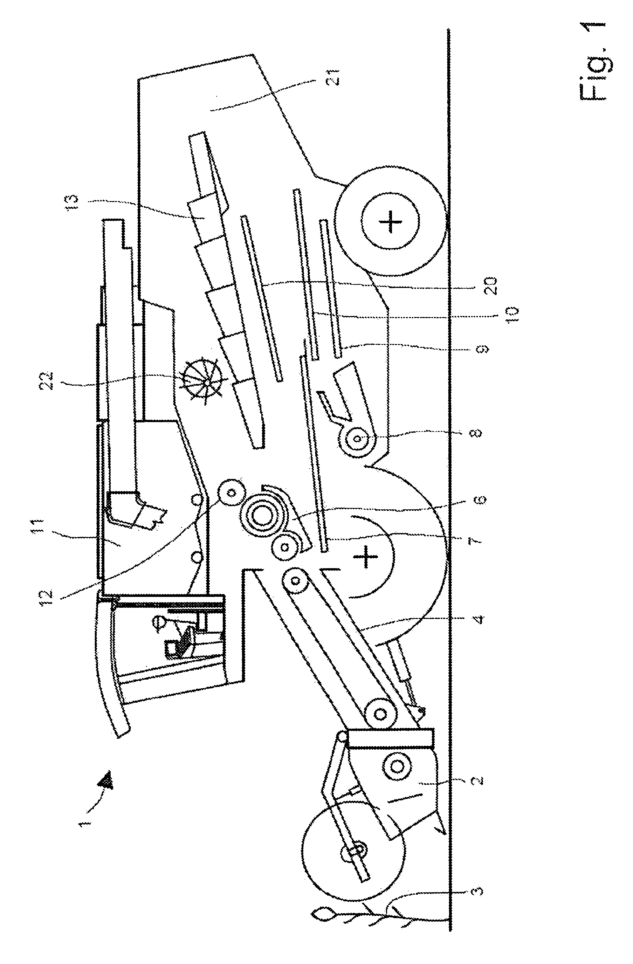

Bei dem in der Fig. 1 dargestellten selbstfahrenden Mähdrescher 1 gelangt das vom Schneidwerk 2 abgeschnittene Erntegut 3 über einen Schrägförderkanal 4 zu einer nach dem Tangentialprinzip arbeitenden Drescheinrichtung 5. In dieser erfolgt der Ausdrusch der in den Fruchtständen des Erntegutes 3 enthaltenen Körner. Das aus Körnern, Kurzstroh und Spreu bestehende Erntegutgemisch gelangt danach über einen unterhalb des Dreschkorbes 6 angeordneten Förderboden 7 zur Reinigungseinrichtung, die aus einem Gebläse 8 und aus einem Unter- und Obersieb 9,10 besteht. Die in der Reinigungseinrichtung abgeschiedenen und gereinigten Körner werden über einen Elevator in den Korntank 11 gefördert. Kurzstrohteile und die Spreu werden durch den Druckluftstrom des Gebläses 8 aus dem Mähdrescher 1 auf den Feldboden gefördert. Die den Dreschkorb 6 in tangentialer Richtung verlassenden Erntegutbestandteile werden über eine Leittrommel 12 zu mehreren, nebeneinander angeordneten Strohschüttlern 13 geleitet, auf denen die noch im Stroh befindlichen Körner abgeschieden werden. Die einzelnen Strohschüttler 13 sind in Lagern 14,15 auf zwei drehbar angetriebenen Kurbelwellen 16,17 gelagert. Die Strohschüttler 13 weisen zwei seitliche, vertikal verlaufende Schüttlerkämme 18 auf, die an der Oberseite zackenförmig ausgebildet sind. Zwischen den beiden Schüttlerkämmen 18 sind Beläge 19 mit Durchtrittsöffnungen für die Körner angeordnet. Die an den Belängen 19 abgeschiedenen Körner sowie kurze Strohteile und Spreu werden über einen unterhalb der Strohschüttler 13 angeordneten Rücklaufboden 20 der Reinigungseinrichtung zugeführt. Die längeren Strohteile werden über die Beläge 19 hinweg in Richtung zum Strohauslauf 21 gefördert. Oberhalb der Strohschüttler 13 ist eine als Schüttlerhilfe wirkende Auflockerungs- und Fördereinrichtung 22 angeordnet, die um eine quer zur Längsrichtung der Strohschüttler 13 liegende Drehachse antreibbar ist. Diese Schüttlerhilfe lockert den Erntegutstrom auf und unterstützt die Förderbewegung des Gutes auf den Strohschüttlern 13.

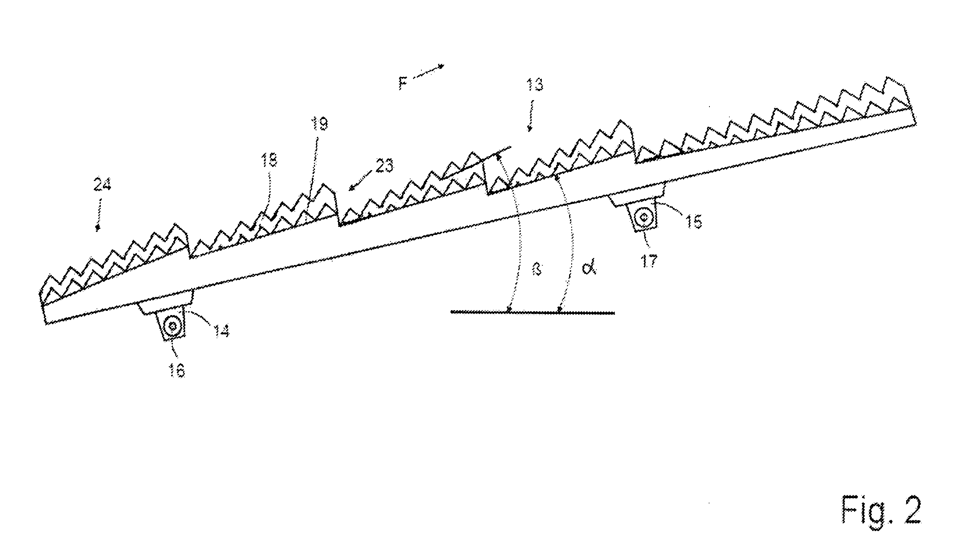

Gemäß der in der Fig. 2 dargestellten Schüttlerausführung mit in Förderrichtung F stufenförmig angeordneten Schüttlerkämmen 18 und Belägen 19 weisen der Belag 19 und die Schüttlerkämme 18 einen unterschiedlich großen Steigungswinkel auf. Die Größe des Steigungswinkels α der Beläge 19 ist dabei kleiner als der Steigungswinkel β der Schüttlerkämme 18. Während der Steigungswinkel β der Schüttlerkämme 18 wie bei den bisher bekannten Ausführungen durchgehend unverändert ca. 23° beträgt, liegt der Steigungswinkel α der Beläge 19 vorzugsweise in einem Bereich von 14° bis 18°, so dass die Fallstufen 23 von einer Belagebene zur nächsten nur einen geringen Höhenunterschied aufweisen.

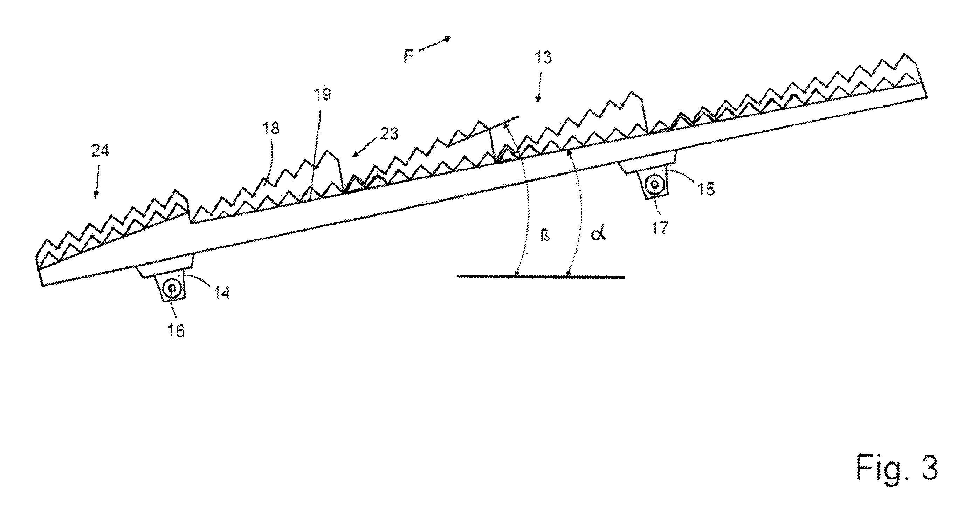

In der Fig. 3 ist eine weitere Ausführung dargestellt, bei der die Schüttlerkämme 18 wie bei der Ausführung nach Fig. 2 in Förderrichtung F stufenförmig verlaufen. Die Beläge 19 hingegen verlaufen jedoch ab der ersten Stufe 24 über die gesamte Schüttlerlänge stufenlos. Der Steigungswinkel α der Beläge 19 beträgt hierbei etwa 8° bis 12°. Neben den funktionellen Vorteilen der stufenlosen BeLagausführung ergeben sich auch noch geringere Herstellungskosten.

Bei beiden dargestellten Ausführungen verlaufen in der ersten Stufe 24 die Beläge 19 und die Schüttlerkämme 18 mit dem gleichen Steigungswinkel mit Abstand etwa parallel zueinander.

Durch den kleineren Steigungswinkel α der Beläge 19 in Bezug auf den Steigungswinkel β der Schüttlerkämme 18 wird das auf den Belägen 19 befindliche Erntegut bei der Förderbewegung beschleunigt, ohne das dabei auf den Schüttlerkämmen 18 bewegte Erntegut zu beeinflussen. Damit wird bei beiden Erntegutströmen eine nahezu gleiche Fördergeschwindigkeit erreicht und eine Erntegut-Mattenbildung auf den Belägen 19 verhindert bzw. deren Dicke verringert, so dass ein hoher Körnerabscheidegrad auf den Strohschüttlern 13 erzielt wird.

### Bezugszeichenliste;

- 1: Mähdrescher
- 2: Schneidwerk
- 3: Erntegut
- 4: Schrägförderkanal
- 5: Drescheinrichtung
- 6: Dreschkorb
- 7: Förderboden
- 8: Gebläse
- 9: Untersieb
- 10: Obersieb
- 11: Korntank
- 12: Leittrommel
- 13: Strohschüttler
- 14,15: Lager
- 16,17: Kurbelwellen
- 18: Schüttlerkämme
- 19: Belag
- 20: Rücklaufboden
- 21: Strohauslauf
- 22: Auflockerungs- und Förderein- richtung
- 23: Fallstufe
- 24: erste Stufe
- F: Förderrichtung
- α: Steigungswinkel, Belag
- β: Steigungswinkel, Schüttlerkämme

## Patentansprüche

1. Mähdrescher (1) mit einer Abscheideeinrichtung, welche aus einer Mehrzahl nebeneinander angeordneter Strohschüttler (13) besteht, wobei die Strohschüttler (13) jeweils zumindest einen Belag (19) aufweisen, der zwischen zumindest zwei seitlichen, den Belag (19) überragenden Schüttlerkämmen (18) befestigt ist und mit Durchtrittsöffnungen zur Abscheidung von Körnern aus einem Korn-Stroh-Gemisch versehen ist, wobei der Belag (19) und die Schüttlerkämme (18) in Förderrichtung (F) ansteigend angeordnet sind, und der Belag (19) und die Schüttlerkämme (18) zumindest abschnittsweise einen unterschiedlich großen Steigungswinkel (α,β) aufweisen,
**dadurch gekennzeichnet,**
**dass** in den Bereichen, in denen der Belag (19) und die Schüttlerkämme (18) unterschiedliche Steigungswinkel aufweisen, der Belag (19) einen Steigungswinkel (α) von 8° bis 18° aufweist.

2. Mähdrescher (1) nach dem Anspruch 1,
**dadurch gekennzeichnet,**
**dass** der Steigungswinkel (α) des Belages (19) kleiner ist als der Steigungswinkel (β) der Schüttlerkämme (18).

3. Mähdrescher (1) nach einem der vorstehenden Ansprüche,
**dadurch gekennzeichnet,**
**dass** die Schüttlerkämme (18) über die gesamte Länge der Strohschüttler (13) einen annähernd konstanten Steigungswinkel (β) aufweisen.

4. Mähdrescher (1) nach einem der vorstehenden Ansprüche,
**dadurch gekennzeichnet,**
**dass** der Belag (19) und die Schüttlerkämme (18) über die gesamte Länge der Strohschüttler (13) stufenförmig ausgebildet sind.

5. Mähdrescher (1) nach Anspruch 4,
**dadurch gekennzeichnet,**
**dass** der Steigungswinkel (α) des Belages (19) nach einer ersten Stufe (24) kleiner ist als der Steigungswinkel (β) der Schüttlerkämme (18).

6. Mähdrescher (1) nach einem der Ansprüchen 1 bis 5,
**dadurch gekennzeichnet,**
**dass** die Schüttlerkämme (18) über die gesamte Länge der Strohschüttler (13) stufenförmig ausgebildet sind und der Belag (19) durchgehend stufenlos verläuft.

7. Mähdrescher (1) nach einem der Ansprüche 1 bis 5,
**dadurch gekennzeichnet,**
**dass** die Schüttlerkämme (18) und der Belag (19) der Strohschüttler (13) eine erste Stufe (24) aufweisen, wobei die Schüttlerkämme (18) über die gesamte Länge der Strohschüttler (13) stufenförmig ausgebildet sind und der Belag (19) ab der Stufe (24) durchgehend stufenlos verläuft, wobei der Steigungswinkel (α) des Belages (19) nach der ersten Stufe (24) kleiner ist als der Steigungswinkel (β) der Schüttlerkämme (18).

8. Mähdrescher (1) nach einem der vorstehenden Ansprüche,
**dadurch gekennzeichnet,**
**dass** den Strohschüttlern (13) eine Auflockerungs- und Fördereinrichtung (22) zugeordnet ist.

## Claims

1. A combine harvester (1) having a separating device comprising a plurality of mutually juxtaposed straw walkers (13), wherein the straw walkers (13) each have at least one lining (19) fixed between at least two lateral walker combs (18) projecting beyond the lining (19), and with through openings for the separation of grains from a grain-straw mixture, wherein the lining (19) and the walker combs (18) are arranged rising in the conveyor direction (F) and the lining (19) and the walker combs (18) at least portion-wise are of a rise angle (α, β) of differing size,
**characterised in that**
in the regions in which the lining (19) and the walker combs (18) have different rise angles the lining (19) has a rise angle (α) of 8° to 18°.

2. A combine harvester (1) according to claim 1 **characterised in that** the rise angle (α) of the lining (19) is less than the rise angle (β) of the walker combs (18).

3. A combine harvester (1) according to one of the preceding claims **characterised in that** the walker combs (18) are of an approximately constant rise angle (β) over the entire length of the straw walkers (13).

4. A combine harvester (1) according to one of the preceding claims **characterised in that** the lining (19) and the walker combs (18) are of a stepped configuration over the entire length of the straw walkers (13).

5. A combine harvester (1) according to claim 4 **characterised in that** the rise angle (α) of the lining (19) after a first step (24) is less than the rise angle (β) of the walker combs (18).

6. A combine harvester (1) according to one of claims 1 to 5 **characterised in that** the walker combs (18) are of a stepped configuration over the entire length of the straw walkers (13) and the lining (19) extends continuously steplessly.

7. A combine harvester (1) according to one of claims 1 to 5 **characterised in that** the walker combs (18) and the lining (19) of the straw walkers (13) have a first step (24), wherein the walker combs (18) are of a stepped configuration over the entire length of the straw walkers (13) and the lining (19) extends continuously steplessly from the step (24), wherein the rise angle (α) of the lining (19) after the first step (24) is less than the rise angle (β) of the walker combs (18).

8. A combine harvester (1) according to one of the preceding claims **characterised in that** a loosening and conveyor device (22) is associated with the straw walkers (13).

## Revendications

1. Moissonneuse-batteuse (1) avec un dispositif de séparation qui se compose de plusieurs secoueurs (13) disposés côte à côte, les secoueurs (13) présentant respectivement au moins un revêtement qui est fixé entre au moins deux peignes de secoueur (18) latéraux débordant du revêtement (19) et est doté d'ouvertures traversantes pour la séparation des grains d'un mélange grains-paille, le revêtement (19) et les peignes de secoueur (18) étant disposés en pente dans la direction d'alimentation (F) et le revêtement (19) et les peignes de secoueur (18) présentant, du moins par section, un angle d'inclinaison (α,β) de grandeur variable,
**caractérisée en ce que**
dans les régions dans lesquelles le revêtement (19) et les peignes de secoueur (18) présentent des angles d'inclinaison différents, le revêtement (19) présente un angle d'inclinaison (α) de 8° à 18°.

2. Moissonneuse-batteuse (1) selon la revendication 1,
**caractérisée en ce que** l'angle d'inclinaison (α) du revêtement (19) est inférieur à l'angle d'inclinaison (β) des peignes de secoueur (18).

3. Moissonneuse-batteuse (1) selon l'une des revendications précédentes,
**caractérisée en ce que**
les peignes de secoueur (18) présentent sur toute la longueur du secoueur (13) un angle d'inclinaison (β) pratiquement constant.

4. Moissonneuse-batteuse (1) selon l'une de revendications précédentes,
**caractérisée en ce que** le revêtement (19) et les peignes de secoueur (18) sont de conception étagée sur toute la longueur du secoueur (13).

5. Moissonneuse-batteuse (1) selon la revendication 4,
**caractérisée en ce que**
l'angle d'inclinaison (α) du revêtement (19) est inférieur après un premier étage (24) à l'angle d'inclinaison (β) des peignes du secoueur (18).

6. Moissonneuse-batteuse (1) selon l'une des revendications 1 à 5,
**caractérisée en ce que**
les peignes du secoueur (18) sont de conception étagée sur toute la longueur du secoueur (13) et que le revêtement (19) s'étend de manière continue, sans étages.

7. Moissonneuse-batteuse (1) selon l'une des revendications 1 à 5,
**caractérisée en ce que**
les peignes du secoueur (18) et le revêtement (19) du secoueur (13) présentent un premier étage (24), les peignes du secoueur (18) étant de conception étagée sur toute la longueur du secoueur (13) et le revêtement (19) s'étendant à partir de l'étage (24) en continu et sans étage, l'angle d'inclinaison (α) du revêtement (19) après le premier étage (24) étant inférieur à l'angle d'inclinaison (β) des peignes du secoueur (18).

8. Moissonneuse-batteuse (1) selon l'une des revendications précédentes,
**caractérisée en ce**
**qu'**un dispositif de fluidisation et de transport (22) est attribué au secoueur (13).
